# EUROPÄISCHE PATENTSCHRIFT

(11) **EP 1 716 036 B1**
(45) Veröffentlichungstag und Bekanntmachung des Hinweises auf die Patenterteilung: **29.08.2007**
(21) Anmeldenummer: 05707547.5
(22) Anmeldetag: 21.02.2005
(51) Int. Cl.: B62B 15/00

(54) **SCHNEEGLEITER**
SNOW GLIDER
DISPOSITIF DE GLISSE SUR NEIGE

(30) Priorität: 19.02.2004 DE 102004008083
(43) Veröffentlichungstag der Anmeldung: 02.11.2006
(73) Patentinhaber: Maier, Georg Nikolaus, 85521 Ottobrunn (DE)
(72) Erfinder: Maier, Georg Nikolaus, 85521 Ottobrunn (DE)
(74) Vertreter: Schlimme, Wolfram
(86) Internationale Anmeldenummer: PCT/EP2005/001770
(87) Internationale Veröffentlichungsnummer: WO 2005/080172

(56) Entgegenhaltungen:
- US-A- 2 219 905
- US-A- 3 145 029
- US-A- 4 199 163
- US-A- 4 262 919
- US-A- 5 893 570

## Beschreibung

Kinderbobs aus einer Kunststoffschale mit integrierter Sitzfläche, auch als 2-Sitzer ausgeführt, Rutschblätter mit zentralem Haltegriff (DE 1 605 877 B) oder auch aufblasbare Kinderrodelgeräte sind als beliebtes und spaßförderndes Kinderspielzeug bekannt.

Diese bieten aber immer nur für eine bis max. 2 Personen Platz Die 2-Sitzer sind zudem sehr groß und können nur schwer transportiert werden. Außerdem müssen die Kinder immer gemeinsam fahren, was oft zu Unstimmigkeiten bei den Kindern führt.

Wenn die Kinder mit einsitzigen Bobs oder Rutschblättern spielen können sie jüngere Geschwister oder Freunde nicht mitnehmen sodass ein gemeinschaftliches Rodelerlebnis nicht zustande kommt

Das Zusammenbinden von Schlitten oder Bobs beinhaltet immer ein höheres Verletzungsrisiko, da sich Kinder in den Seilen und Schnüren beim Sturz verfangen können und eine ernsthafte Gefahr für Zerrungen oder ähnliche Verletzungen besteht. Ein Schneegleiter gemäß der Merkmale des Oberbegriffs des Anspruchs 1 ist aus US 314 5029 bekannt.

Aufgabe der Erfindung ist es, einen Schneegleiter so zu gestalten, dass er sowohl als Einsitzer als auch als Mehrsitzer verwendet werden kann und bei einem Sturz das Verletzungsrisiko mindert.

Diese Aufgabe wird dadurch gelöst dass der Schneegleiter als modulare Einheit aufgebaut ist. Der Schneegleiter besteht aus jeweils einer, vorne-und hinten angeordneten, tellerförmigen, kreisrunden Vertiefungen , die formgleich oder zumindest annähernd formgleich gestaltet sind und durch ein Mittelteil verbunden sind. Die tellerförmige Vertiefung vorne wird in die hintere Vertiefung eines baugleichen zweiten Schneegleiters gelegt oder auch darunter geschoben. Wenn sich eine Person auf diese beiden ineinandergelegten Teller setzt, werden durch das Gewicht dieser Person die beiden Teller in Position gehalten und die Schneegleiter untereinander verbunden, ohne dass zusätzliches Verbindungsmaterial nötig ist. Die Füße der hinteren Person werden auf die Griffschalen des vorderen Schneegleiters gelegt um eine ungehinderte Fahrt zu ermöglichen.

Die Schräge an den Tellern ist so zu wählen, dass ein Gleiten im Schnee ermöglicht wird aber zudem ein sicherer Halt der beiden Teller untereinander gewährleistet ist.

Die ineinandergelegten, kreisrunden, tellerförmigen Vertiefungen lassen eine Verdrehung der Schneegleiter untereinander zu. Damit wird auch eine schlängelnde Fahrt möglich um den Fahrspaß bei Kindern deutlich zu steigern.

Der Vorteil dieser Erfindung liegt darin, dass Kinder einen erhöhten Spielwert beim Einsatz der Schneegleiter erhalten und je nach Situation diese einzein benutzen können oder auch diese spontan zu einer beliebig langen Kette verbinden können, ohne Verbindungselemente benutzen zu müssen. Bei einem Sturz lösen sich die Gleiter untereinander wieder ohne dass zusätzliche Verbindungselemente die Verletzungsgefahr erhöhen könnten.

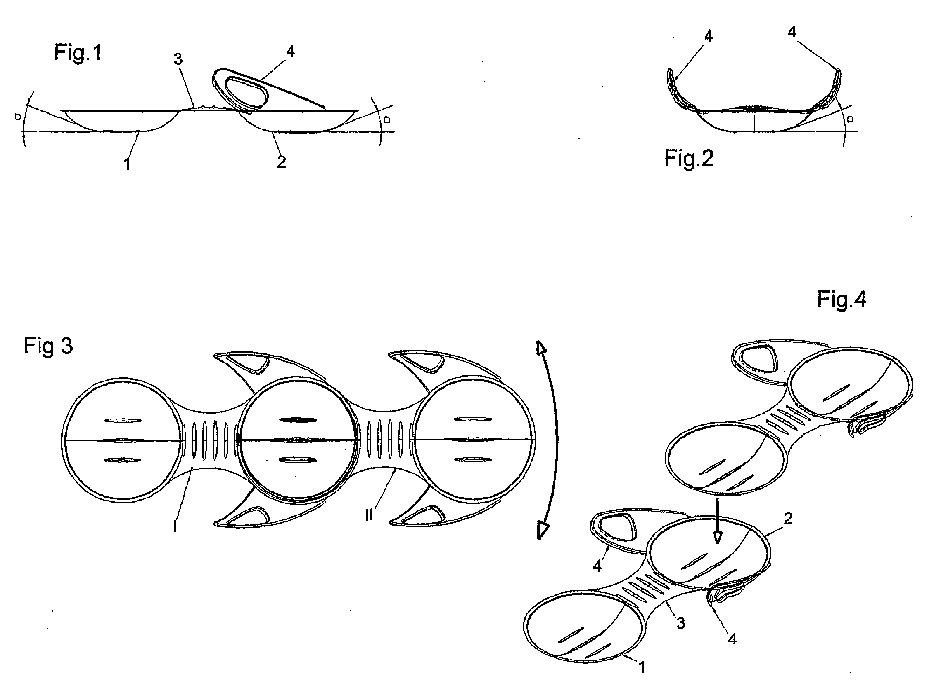

Ein Ausführungsbeispiel der Erfindung ist in der Zeichnung dargestellt.
Es zeigen: Figur 1 Seitenansicht des Schneegleiters
Figur 2 Frontansicht
Figur 3 Draufsicht zweier kombinierter Schneegleiter
Figur 4 Perspektive Ansicht zweier Gleiter

Der Schneegleiter besitzt vorne (1) und hinten (2) jeweils tellerförmige, kreisrunde Vertiefungen die über ein Mittelteil (3) verbunden sind. Am hinteren Teller sind beidseitig Griffschalen (4) angebracht, die zum einen während der Fahrt für sicheren Halt sorgen, die aber auch bei der Kombination mehrerer Gleiter als Fußaufnahme des Hintermanns dienen. Der Winkel der Teller (a) zum Boden ist so flach zu wählen, dass Die Fahrt auf Schnee möglich ist, zum anderen so steil, dass ein herausgleiten der Teller während der Fahrt vermieden wird.

Wie in Figur 3 gezeigt wird, kann durch aufeinanderlegen der Gleiter eine beliebig lange Kette gebildet werden, indem das vordere Teller von Gleiter II auf das hintere Teller von Gleiter I gelegt wird. Die Füße der Person auf Gleiter II ruhen dabei auf den Griffschalen von Gleiter I. Durch die kreisförmige Vertiefung der Teller (1 und 2) Ist ein Verdrehen der beiden Teller während der Fahrt möglich.

## Patentansprüche

1. Schneegleiter, gebildet aus einer Kunststoffschale mit
- einer vorderen Vertiefung (1),
- einer hinteren Vertiefung (2) und
- einem die beiden Vertiefungen (1, 2) verbindenden Mittelteil (3),
**dadurch gekennzeichnet,**
- **daß** die vordere Vertiefung (1) in einem vorderen Teller ausgebildet ist,
- **daß** die hintere Vertiefung (2) in einem hinteren Teller ausgebildet ist,
- **daß** der Mittelteil (3) die beiden Teller miteinander verbindet und
- **daß** die vordere Vertiefung (1) und die hintere Vertiefung (2) formgleich oder annähernd formgleich gestaltet sind, so daß zum Aneinanderkoppeln derartiger baugleicher Schneegleiter (I, II) entweder die hintere Vertiefung (2) eines ersten Schneegleiters (I) in die vordere Vertiefung (1) eines zweiten Schneegleiters (II) oder die vordere Vertiefung (1) des zweiten Schneegleiters (II) in die hintere Vertiefung (2) des ersten Schneegleiters (I) einlegbar ist.

2. Schneegleiter nach Anspruch 1,
**dadurch gekennzeichnet,**
**daß** die vordere Vertiefung (1) und die hintere Vertiefung (2) jeweils kreisrund ausgebildet sind, so daß die kreisrunden tellerförmigen Vertiefungen ineinandergelegt eine Verdrehung der Schneegleiter untereinander gestatten und somit auch eine schlängelnde Fahrt zulassen.

3. Schneegleiter nach Anspruch 1 oder 2,
**dadurch gekennzeichnet,**
**daß** am hinteren Teller (2) beidseitig Griffschalen (4) angebracht sind.

4. Modulare Einheit aus zumindest zwei Schneegleitern gemäß einem der vorhergehenden Ansprüche,
wobei die Schneegleiter miteinander **dadurch** verbunden sind, daß entweder die hintere Vertiefung (2) eines ersten Schneegleiters (I) in die vordere Vertiefung (1) eines zweiten Schneegleiters (II) oder die vordere Vertiefung (1) des zweiten Schneegleiters (II) in die hintere Vertiefung (2) des ersten Schneegleiters (I) eingelegt ist.

5. Modulare Einheit gemäß Anspruch 4, mit Schneegleitern gemäß Anspruch 2,
**dadurch gekennzeichnet,**
**daß** die ineinandergelegten Vertiefungen (1, 2) der Schneegleiter (I, II) ein Gelenk zum Verdrehen der beiden zugeordneten Teller relativ zueinander bilden.

6. Modulare Einheit gemäß Anspruch 4 oder 5, mit zumindest einem vorderen Schneegleiter gemäß Anspruch 3,
**dadurch gekennzeichnet,**
**daß** die Griffschalen (4) des vorderen Schneegleiters (I) als Fußaufnahmen für eine auf einem dahinter angeordneten Schneegleiter (II) sitzende Person ausgebildet sind.

## Claims

1. Snow glider, formed from a plastic shell with
- a front recess (1),
- a rear recess (2) and
- a centre part (3) linking the two recesses (1, 2)
**characterized in that**
- the front recess (1) is located in a front tray,
- the rear recess (2) is located in a rear tray,
- the centre part (3) connects the two trays to each other and
- the front recess (1) and the rear recess (2) are of the same shape, or approximately the same shape, so that in order to link up such identical snow gliders (I, II) either the rear recess (2) of a first snow glider (I) can be positioned in the front recess (1) of a second snow glider (II) or the front recess (1) of the second snow glider (II) can be positioned in the rear recess (2) of the first snow glider (I).

2. Snow glider in accordance with Claim 1,
**characterized in that**
the front recess (1) and the rear recess (2) are each circular, so that when the circular tray-shaped recesses engage with each other they allow the snow gliders to swivel with respect to each other and thus also allow them to weave as they move.

3. Snow glider in accordance with Claim 1 or 2,
**characterized in that**
grip plates (4) are mounted on both sides of the rear tray (2) .

4. Modular unit consisting of at least two snow gliders in accordance with one of the preceding Claims,
wherein the snow gliders are connected to each other by either the rear recess (2) of a first snow glider (I) being positioned in the front recess (1) of a second snow glider (II) or of the front recess (1) of the second snow glider (II) being positioned in the rear recess (2) of the first snow glider (I).

5. Modular unit in accordance with Claim 4, with snow gliders in accordance with Claim 2,
**characterized in that** the engaged recesses (1, 2) of the snow gliders (I, II) form an articulation to allow the two associated trays to swivel with respect to each other.

6. Modular unit in accordance with Claim 4 or 5, with at least one front snow glider in accordance with Claim 3,**characterized in that** the grip plates (4) of the front snow glider (I) are designed as foot rests for a person sitting on a snow glider (II) located behind the front snow glider (I).

## Revendications

1. Dispositif de glisse sur neige, constitué d'une coque en matière plastique comprenant :
- un renfoncement antérieur (1),
- un renfoncement postérieur (2), et
- une partie médiane (3) reliant les deux renfoncements (1,2);
**caractérisé en ce que**:
- le renfoncement antérieur (1) est formé dans une plaque antérieure,
- le renfoncement postérieur (2) est formé dans une plaque postérieure,
- la partie médiane (3) relie les deux plaques l'une à l'autre, et
- le renfoncement antérieur (1) et le renfoncement postérieur (2) sont conçus de même forme ou approximativement de même forme, de sorte que pour accoupler entre eux des dispositifs de glisse sur neige de même construction (I, II) il est possible de placer soit le renfoncement postérieur (2) d'un premier dispositif de glisse (I) dans le renfoncement antérieur (1) d'un second dispositif de glisse (II), soit le renfoncement antérieur (1) du second dispositif de glisse (II) dans le renfoncement postérieur (2) du premier dispositif de glisse (I).

2. Dispositif de glisse sur neige selon la revendication 1,
**caractérisé en ce que** :
le renfoncement antérieur (1) et le renfoncement postérieur (2) sont réalisés chacun de forme circulaire, de sorte que les renfoncements en plaque de forme circulaire en place l'un dans l'autre permettent une rotation des dispositifs de glisse sur neige les uns par rapport aux autres et autorisent ainsi également un déplacement en serpentement.

3. Dispositif de glisse sur neige selon la revendication 1 ou 2,
**caractérisé en ce que** :
des coques de préhension (4) sont attachées des deux côtés sur la plaque postérieure (2).

4. Unité modulaire formée d'au moins deux dispositifs de glisse sur neige selon l'une des revendications précédentes,
dans laquelle les dispositifs de glisse sur neige sont reliés l'un à l'autre en ce que soit le renfoncement postérieur (2) d'un premier dispositif de glisse (I) est placé dans le renfoncement antérieur (1) d'un second dispositif de glisse (II), soit le renfoncement antérieur (1) du second dispositif de glisse (II) est placé dans le renfoncement postérieur (2) du premier dispositif de glisse (I).

5. Unité modulaire selon la revendication 4, comprenant des dispositifs de glisse sur neige selon la revendication 2,
**caractérisé en ce que:**
les renfoncements (1, 2), placés l'un dans l'autre, des dispositifs de glisse sur neige (I, II) forment une articulation pour la rotation des deux plaques associées l'une par rapport à l'autre.

6. Unité modulaire selon la revendication 4 ou 5, comprenant au moins un dispositif de glisse sur neige antérieur selon la revendication 3,
**caractérisé en ce que**:
les coques de préhension (4) du dispositif de glisse sur neige antérieur (I) sont réalisées comme des récepteurs de pieds pour une personne assise sur le dispositif de glisse sur neige (II) agencé derrière.
